(19)

Europäisches
Patentamt
European
Patent Office
Office européen
des brevets

(11) **EP 2 055 679 A1**

(12) **EUROPEAN PATENT APPLICATION**
published in accordance with Art. 153(4) EPC

(43) Date of publication:
**06.05.2009 Bulletin 2009/19**

(21) Application number: **07768404.1**

(22) Date of filing: **06.07.2007**

(51) Int Cl.:
*C01G 53/00* (2006.01)     *H01M 4/50* (2006.01)
*H01M 4/52* (2006.01)

(86) International application number:
**PCT/JP2007/063934**

(87) International publication number:
**WO 2008/007752 (17.01.2008 Gazette 2008/03)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **10.07.2006 JP 2006189005**

(71) Applicant: **Sumitomo Chemical Company, Limited
Tokyo 104-8260 (JP)**

(72) Inventors:
• **KAWAKAMI, Yoshihiro
NIIHAMA-SHI, EHIME (JP)**
• **KANESAKA, Sho
Tsukuba-shi
Ibaraki 305-0821 (JP)**

(74) Representative: **Hart-Davis, Jason et al
Cabinet Beau de Loménie,
158, rue de l'Université
75340 Paris Cedex 07 (FR)**

(54) **LITHIUM COMPOSITE METAL OXIDE**

(57)     Provided is a lithium composite metal oxide containing Li, Ni and M (wherein, M is Mn and/or Co), **characterized by** exhibiting Signal B below in a spectrum at a rotational speed of 10 kHz among the solid-state nuclear magnetic resonance spectra of $^7$Li of a lithium composite metal oxide obtained by the nuclear magnetic resonance measuring method 1,
<Nuclear magnetic resonance measuring method 1>
A lithium composite metal oxide is rotated at each of rotational speeds of 10 kHz and 11 kHz by the magic angle-spinning method using a nuclear magnetic resonance apparatus with a magnetic field strength of 7.05 teslas, a solid-state nuclear magnetic resonance of $^7$Li of the lithium composite metal oxide is measured at each rotational speed, and a chemical shift of a central peak is evaluated from two resulting solid-state nuclear magnetic resonance spectra (wherein the chemical shift value is a value corrected by taking a position of a central peak of lithium chloride as 0 ppm using lithium chloride as an external standard substance);
<Signal B>
A signal having a central peak and its spinning side bands, wherein the central peak has a chemical shift in the range of +1100 to +1900 ppm and the largest peak has a chemical shift in the range of +2100 to +2600 ppm.

Fig.1

**Description**

TECHNICAL FIELD

The present invention relates to a lithium composite metal oxide.

BACKGROUND ART

Lithium composite metal oxides are used for positive electrodes of nonaqueous electrolyte secondary batteries such as lithium secondary batteries. Lithium secondary batteries are already practically used for power sources such as mobile phones and notebook computers. In addition, the attempts are made to apply the lithium secondary batteries to medium-size applications and large-size applications such as vehicle applications and power storage applications.
Japanese Patent Laid-Open No. 2002-100356 discloses Lithium nickel manganese M composite oxides (M is Fe, Co, Cr or Al) as lithium composite metal oxides used for conventional lithium secondary batteries, and expressly discloses, for example, a lithium secondary battery obtained by using a lithium composite metal oxide ($LiNi_{0.5}Mn_{0.5}O_2$) has a capacity maintaining rate of 92% in its charge-discharge cycle.

DISCLOSURE OF THE INVENTION

However, the capacity maintaining rates of conventional lithium secondary batteries are not sufficient. The object of the present invention is to provide a lithium composite metal oxide useful for a nonaqueous electrolyte secondary battery that can exhibit a capacity maintaining rate higher than before.
The present inventors have conducted various studies and found that the lithium composite metal oxides listed below fulfill the above object, having led to the present invention.
That is, the present invention is constituted by the inventions described below.

<1> A lithium composite metal oxide containing Li, Ni and M (wherein, M is Mn and/or Co), characterized by exhibiting Signal B below in a spectrum at a rotational speed of 10 kHz among the solid-state nuclear magnetic resonance spectra of $^7Li$ of a lithium composite metal oxide obtained by the nuclear magnetic resonance measuring method 1,
<Nuclear magnetic resonance measuring method 1>
A lithium composite metal oxide is rotated at each of rotational speeds of 10 kHz and 11 kHz by the magic angle-spinning method using a nuclear magnetic resonance apparatus with a magnetic field strength of 7.05 teslas, a solid-state nuclear magnetic resonance of $^7Li$ of the lithium composite metal oxide is measured at each rotational speed, and a chemical shift of a central peak is evaluated from two resulting solid-state nuclear magnetic resonance spectra (wherein the chemical shift value is a value corrected by taking a position of a central peak of lithium chloride as 0 ppm using lithium chloride as an external standard substance);
<Signal B>
A signal having a central peak and its spinning side bands, wherein the central peak has a chemical shift in the range of +1100 to +1900 ppm and the largest peak has a chemical shift in the range of +2100 to +2600 ppm.

<2> The lithium composite metal oxide described in <1> above, the intensity of the largest peak of Signal B is more than 0.05 when the intensity of the largest peak of the solid-state nuclear magnetic resonance spectrum of $^7Li$ of lithium hydroxide monohydrate obtained by the nuclear magnetic resonance measuring method 2 is taken as 100,
<Nuclear magnetic resonance measuring method 2>
A lithium hydroxide monohydrate is rotated at a rotational speed of 10 kHz by the magic angle-spinning method using a nuclear magnetic resonance apparatus with a magnetic field strength of 7.05 teslas to measure the solid-state nuclear magnetic resonance of $^7Li$ of the lithium hydroxide monohydrate and a solid-state nuclear magnetic resonance spectrum of $^7Li$ is obtained.

<3> The lithium composite metal oxide described in <1> or <2> above, characterized by further exhibiting Signal A in the spectrum obtained by rotating the lithium composite metal oxide at the rotational speed of 10k Hz,
<Signal A>
A signal having a central peak and its spinning side bands, wherein the central peak has a chemical shift in the range of -50 to +300 ppm and the largest peak has a chemical shift in the range of -50 to +300 ppm.

<4> The lithium composite metal oxide described in any of <1> to <3> above, wherein the amount of M (mole) is more than 0 and not more than 0.9 to the total amount (mole) of Ni and M.

<5> The lithium composite metal oxide described in any of <1> to <4> above, wherein the amount of Co (mole) is not less than 0 and not more than 0.4, to the total amount (mole) of Mn and Co.

<6> The lithium composite metal oxide described in any of <1> to <4> above, wherein M is Mn.

<7> The lithium composite metal oxide described in any of <1> to <6> above, wherein the amount of Li (mole) is not less than 0.6 and not more than 1.5, to the total amount (mole) of (Ni + M).

<8> A positive electrode for a nonaqueous electrolyte secondary battery, comprising the lithium composite metal oxide described in any of <1> to <7> above.

<9> A nonaqueous electrolyte secondary battery comprising the positive electrode for the nonaqueous electrolyte secondary battery described in <8> above.

According to the present invention, a nonaqueous electrolyte secondary battery exhibiting an improved capacity maintaining rate can be obtained as compared with a conventional lithium secondary battery. Accordingly, the present invention especially becomes extremely useful for a nonaqueous electrolyte secondary battery that is demanded of a high power at a high electric current rate, namely, a nonaqueous electrolyte secondary battery for cars and power tools such as electric tools.

BRIEF DESCRIPTION OF THE DRAWINGS

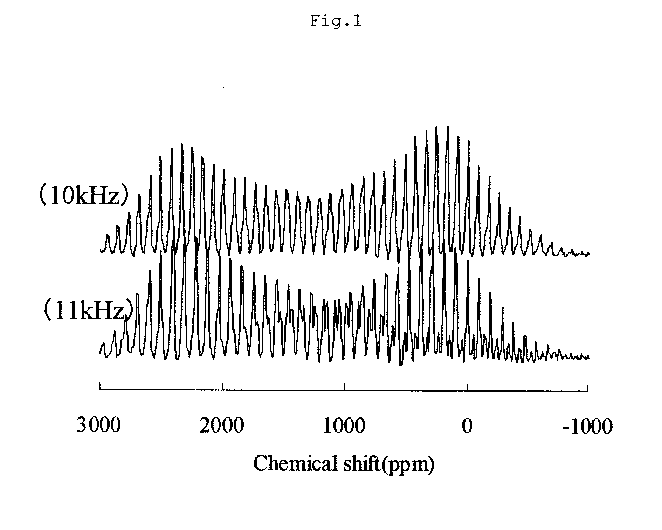

Fig. 1 shows a solid-state nuclear magnetic resonance spectra of $^7$Li of a lithium composite metal oxide powder $A_5$ (The range of the chemical shift is from -1000 ppm to 3000 ppm.) in example 5. The spectrum above is a spectrum when the A5 is rotated at a rotational speed of 10 kHz, and the spectrum below is a spectrum when the $A_5$ is rotated at 11 kHz.

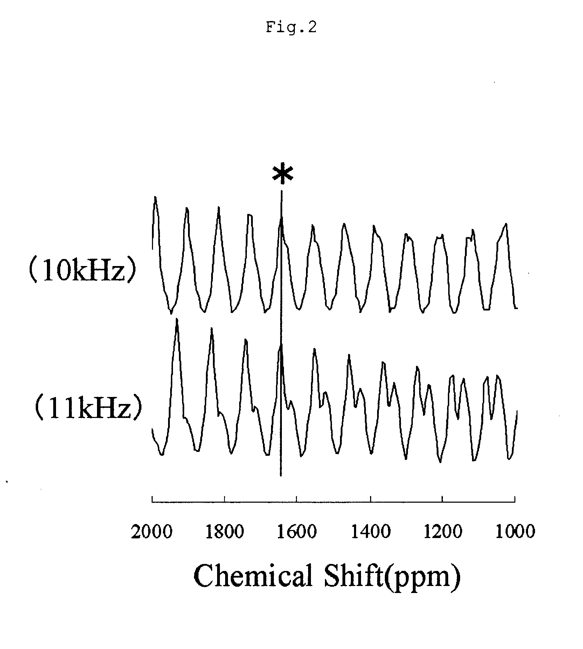

Fig. 2 is an enlarged view of the range of the chemical shift of 1000 to 2000 ppm in the spectra of Fig. 1. The spectrum above is a spectrum obtained when the $A_5$ is rotated at a rotational speed of 10 kHz, and the spectrum below is a spectrum obtained when the $A_5$ is rotated at 11 kHz. The vertical line indicated by * shows the central peak of Signal B.

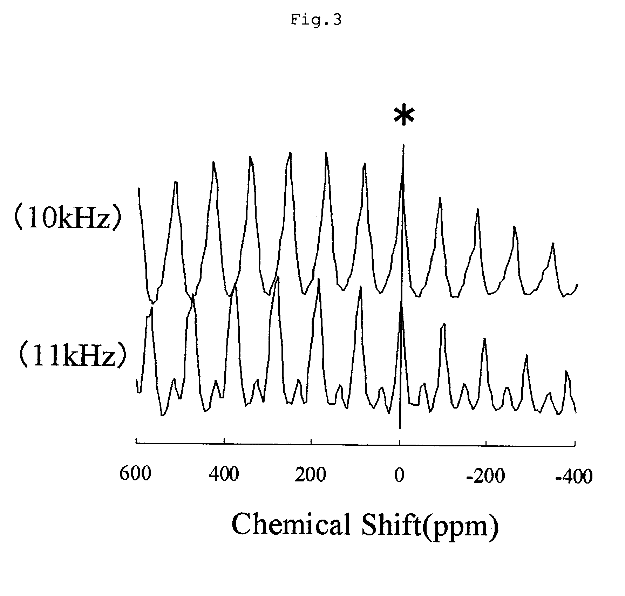

Fig. 3 is an enlarged view of the range of the chemical shift of -400 to 600 ppm in the spectra of Fig. 1. The spectrum above is a spectrum obtained when the $A_5$ is rotated at a rotational speed of 10 kHz, and the spectrum below is a spectrum obtained when the $A_5$ is rotated at 11 kHz. The vertical line indicated by * shows the central peak of Signal A.

BEST MODE FOR CARRYING OUT THE INVENTION

The lithium composite metal oxide of the present invention is a lithium composite metal oxide containing Li, Ni and M (wherein, M is Mn and/or Co), characterized by exhibiting signal B below in a spectrum at a rotational speed of 10 kHz among the solid-state nuclear magnetic resonance spectra of $^7$Li of a lithium composite metal oxide obtained by the following nuclear magnetic resonance measuring method 1.

<Nuclear magnetic resonance measuring method 1>

A lithium composite metal oxide is rotated at each of rotational speeds of 10 kHz and 11 kHz by the magic angle-spinning method using a nuclear magnetic resonance apparatus with a magnetic field strength of 7.05 teslas, a solid-state nuclear magnetic resonance of $^7$Li of the lithium composite metal oxide is measured at each rotational speed, and a chemical shift of a central peak is evaluated from two resulting solid-state nuclear magnetic resonance spectra, wherein the chemical shift value is a value corrected by taking a position of a central peak of lithium chloride as 0 ppm using lithium chloride as an external standard substance.

<Signal B>

A signal having a central peak and its spinning side bands, wherein the central peak has a chemical shift in the range of +1100 to +1900 ppm and the largest peak has a chemical shift in the range of +2100 to +2600 ppm.
In the present invention, the central peak means peaks detected at the same chemical shift, not depending on rotational speeds, in the solid-state nuclear magnetic resonance spectra of $^7$Li. Specifically, as shown in the nuclear magnetic resonance measuring method 1, the central peak means peaks detected at the same chemical shift irrespective of the difference of each of the rotational speeds of 10 kHz and 11 kHz (refer to Figs. 2 and 3, attached in the drawings of this application).

In the present invention, a signal means a peak group comprising one central peak and its spinning side bands.

The spinning side band means a peak detected at a chemical shift separated by only integral multiples of the rotational speed on both sides of the central peak in a solid-state nuclear magnetic resonance spectrum of $^7$Li. In the present invention, since the nuclear magnetic resonance apparatus with a magnetic field strength of 7.05 teslas is used and lithium chloride ($^7$Li) is used as the external standard substance, the central peak of lithium chloride is detected at 116.6 MHz. In the present invention, the chemical shift of the central peak of this lithium chloride is taken as 0 ppm and the chemical shift of 116.6 Hz is converted into a chemical shift of 1 ppm to thereby obtain a corrected spectrum. Therefore, the spinning side bands are detected at chemical shifts separated by integral multiples of 10 kHz (i.e., 85.8 ppm) on both the sides from the central peak in the signal of the solid-state nuclear magnetic resonance spectrum of $^7$Li of the lithium composite metal oxide at a rotational speed of 10 kHz in the present invention.

Moreover, in the present invention, the largest peak means a peak that indicates the largest intensity of the peak groups of the above signal. The intensity of a peak is taken as the height of the peak on the basis on the spectrum baseline. Accurate measurement of the intensity of a peak needs sufficient accumulation to smooth the baseline, although depending on the sensibility of the nuclear magnetic resonance apparatus. A well-known method can be used as a method of smoothing a baseline. The examples can include a method of using a higher-order spline function (e.g., about fourth to sixth orders) and the linear prediction method.

In addition, in the present invention, when the intensity of the largest peak of the solid-state nuclear magnetic resonance spectrum of $^7$Li of lithium hydroxide monohydrate obtained by the following nuclear magnetic resonance measuring methods 2 is taken as 100 for Signal B above, in the case where the intensity of the largest peak of Signal B is 0.05 or less, this lithium composite oxide is regarded as not exhibiting Signal B.

<Nuclear magnetic resonance measuring method 2>

A lithium hydroxide monohydrate is rotated at a rotational speed of 10 kHz by the magic angle-spinning method using a nuclear magnetic resonance apparatus with a magnetic field strength of 7.05 teslas to measure the solid-state nuclear magnetic resonance of $^7$Li of the lithium hydroxide monohydrate and a solid-state nuclear magnetic resonance spectrum of $^7$Li is obtained.

As stated above, in the present invention, the lithium hydroxide monohydrate that is a chemically stable compound is used for the reference of the peak intensity in lithium composite metal oxides. In general, the peak intensity is influenced by measurement conditions such as the measuring instrument, the temperature, the number of revolutions of a sample, the volume of a sample, the pulse width, the number of accumulations, the repetition time of accumulation, the observation width, the time until initiation of incorporation of data points and the center frequency of pulse irradiation. Therefore, the above measurement conditions need to be the same between lithium hydroxide monohydrate and a lithium composite metal oxide in the measurement of peak intensity.

Additionally, the data processing conditions such as the kind of weight functions, the broadening parameters, the number of data points to be used for linear prediction, and the number of predicted data points in the case of data points before data incorporated being predicted, also the influence peak intensity. Hence, the above data processing conditions need to be the same between lithium hydroxide monohydrate and a lithium composite metal oxide in the measurement of peak intensity.

In the lithium composite metal oxide of the present invention, the intensity of the largest peak of Signal B is more than 0.05 when the intensity of the largest peak of the solid-state nuclear magnetic resonance spectrum of $^7$Li of lithium hydroxide monohydrate obtained by the nuclear magnetic resonance measuring method 2 below is taken as 100. For further improvement of the capacity maintaining rate, the intensity of the largest peak is preferably in the range of 0.1% to 10%.

In addition, preferably, the lithium composite metal oxide of the present invention further exhibits Signal A below in a spectrum obtained by rotating a lithium composite metal oxide at the above rotational speed of 10 kHz.

<Signal A>

A signal having a central peak and its spinning side bands, wherein the central peak has a chemical shift in the range of -50 to +300 ppm and the largest peak has a chemical shift in the range of -50 to +300 ppm.

In the present invention, in further improvement of the capacity maintaining rate, when the intensity of the largest peak of the solid-state nuclear magnetic resonance spectrum of $^7$Li of lithium hydroxide monohydrate obtained by the above nuclear magnetic resonance measuring method 2 is taken as 100, the largest peak intensity of Signal A is 0.1 or more, more preferably 0.4 or more. Moreover, the upper limit of the largest peak intensity of Signal A is typically about 10. In addition, in Signal A also, when the intensity of the largest peak of the solid-state nuclear magnetic resonance spectrum of $^7$Li of lithium hydroxide monohydrate obtained by the above nuclear magnetic resonance measuring methods 2 is taken as 100, in the case where the intensity of the largest peak of Signal A is 0.05 or less, this lithium composite oxide is regarded as not exhibiting Signal A.

In the composition of the lithium composite metal oxide of the present invention, for the compositions of Ni and M, the case where the amount (mole) of M is more than 0 and not more than 0.9 is preferred for making larger the capacity maintaining rate, more preferably not less than 0.4 and not more than 0.9, still more preferably not less than 0.5 and not more than 0.8, to the total amount (mole) of Ni and M.

Additionally, for M, namely, the composition of Mn and Co, the case where the amount (mole) of Co is not less than 0 and not more than 0.4 is preferred for making larger the capacity maintaining rate, more preferably not less than 0 and not more than 0.35, still more preferably not less than 0 and not more than 0.25, to the total amount (mole) of Mn and Co.

Moreover, M is preferably Mn, in consideration of the cost performance.

In addition, for the composition of Li, Ni and M, the case where the amount (mole) of Li is not less than 0.6 and not more than 1.5 is preferred for making the capacity maintaining rate larger, more preferably not less than 1.0 and not more than 1.4, still more preferably not less than 1.1 and not more than 1.4, to the total amount (mole) of (Ni + M).

Additionally, a part of Li, Ni, Co and Mn of a lithium composite metal oxide may be substituted by elements such as B, Al, Ga, In, Si, Ge, Sn, Mg, Sc, Y, Ti, Zr, Hf, V, Nb, Ta, Cr, Mo, W, Tc, Ru, Rh, Ir, Pd, Cu, Ag and Zn within the range of not deteriorating the merits of the present invention.

The crystal structure of the lithium composite metal oxide of the present invention is typically a layered rock salt type crystal structure, that is, a $NaFeO_2$ type crystal structure.

The crystal structure can be measured by the powder X-ray diffraction measurement.

The BET specific surface area of the lithium composite metal oxide of the present invention is typically about not lea than 3 $m^2/g$ and not more than 30 $m^2/g$. To obtain a nonaqueous electrolyte secondary battery that shows a higher power in a high electric current rate, the BET specific surface area of the lithium composite metal oxide is preferably not less than 4 $m^2/g$ and not more than 20 $m^2/g$, more preferably not less than 5 $m^2/g$ and not more than 16 $m^2/g$.

The lithium composite metal oxide of the present invention has a core material and the surface of its particle may be further adhered with a compound that contains one or more species of the elements selected from B, Al, Ga, In, Si, Ge, Sn, Mg and the transition metal elements. Of the above elements, one or more species of elements selected from B, Al, Mg, Co, Cr and Mn are preferred, and Al is much preferred from the viewpoint of operability. The compounds include, for example, oxides, hydroxides, oxyhydroxides, carbonates, nitrates and organic acid salts of the above element, or these mixtures. Above all, the oxides, the hydroxides and the oxyhydroxides or these mixtures are preferred. Among all them, alumina is more preferable.

Next, the method of manufacturing the lithium composite metal oxide of the present invention will be described.

The lithium composite metal oxide of the present invention can be manufactured by a method of calcining a metal compound mixture that may become the lithium composite metal oxide of the present invention by calcination, namely, the solid reaction method. Specifically, in the composition of the lithium composite metal oxide of the present invention, when the molar ratio of Li:Ni:Mn:Co is 1:x:y:z, a Li-containing compound, a Ni-containing compound, a Mn-containing compound and Co-containing compound are used and weighed such that the molar ratio of Li:Ni:Mn:Co becomes A:x:y:Z (wherein, A is a value of a range of not less than 2 and not more than 5). The lithium composite metal oxide can be obtained by preferably calcinating the metal compound mixture obtained after mixing, in the temperature range of 800°C to 1000°C. Here, A is preferably a value of a range of not less than 2.1 and not more than 3.5.

An oxide is used as a compound that contains each of the above-mentioned metal elements of Li, Ni, Mn, and Co. Alternatively, a compound that may be degraded and/or oxidized at high temperatures to become an oxide, such as a hydroxide, a oxyhydroxide, a carbonate, a nitrate, an acetate, a halide, an oxalate or an alkoxide, can be used. Among these, the Li-containing compound is preferably a hydroxide and/or a carbonate. The Ni-containing compound is preferably a hydroxide and/or an oxide. The Mn-containing compound is preferably a carbonate and/or an oxide. The Co-containing compound is preferably an oxide and/or a hydroxide. In addition, a composite compound that contains two or more kinds of the above metal elements may be used as a compound containing a metal element.

The above metal compound mixture before calcination may further contain a boron-containing compound in order to improve the crystallinity of a lithium composite metal oxide to thereby increase the initial discharge capacity. The content of boron-containing compound is typically not less than 0.0001 mole % and not more than 5 mole % in terms of boron, preferably not less than 0.0001 mole % and not more than 3 mole % in terms of boron, to the total mole of the metal elements excluding the lithium in the above metal compound mixture. The boron-containing compounds include boron oxides and boric acid, preferably boric acid. In addition, the boron further contained in the metal compound mixture here may remain in the lithium composite metal oxide of the present invention after calcinations, or may be removed by washing, evaporation, or the like.

The compound that contains the above metallic element may be mixed by either dry blending or wet blending.

However, a simpler and easier dry blending is preferred, and the compound can be mixed by a dry blending device such as a V-type mixer, a W-type mixer, a ribbon mixer, a drum mixer or a dry ball mill.

The lithium composite metal oxide is obtained by optionally subjecting the above metal compound mixture to compression molding and then retaining and calcining the mixture in the temperature range of from 800 to 1000°C for 2 to 30 hours. Additionally, air, oxygen, nitrogen, argon or a mixed gas thereof can be used as an atmosphere for calcination. An atmosphere including oxygen is preferred.

The lithium composite metal oxide of the present invention can be manufactured also, for example, by the hydrothermal reaction process described below, namely, a method that includes the steps (1), (2), (3) and (4) in this order, in addition to the above solid reaction method,

(1) A step of generating precipitate by mixing an aqueous solution containing Ni and M with alkali (A)
(2) A step of subjecting a liquid mixture containing the precipitate and an oxidizing agent and an alkali (B) including LiOH to hydrothermal treatment in the temperature range of 150°C to 350°C to obtain a hydrothermal-treated product
(3) A step of washing the hydrothermal treatment product to obtain a washed product
(4) A step of drying the washed product to obtain a dried product.

The aqueous solution containing Ni and M (wherein, M is Mn and/or Co) in step (1) may contain Ni and M in an aqueous solution. The raw material is a compound that contains Ni and M. When a water-soluble compound such as a chloride, a nitrate salt, a sulfate salt, an oxalate salt or an acetate salt is used, the compound may be dissolved in water for production. These water-soluble compounds may be either anhydrides or hydrates. In addition, when a metal material of Mi and M or a compound containing Ni and M is used as a raw material and compounds that are hardly soluble in water such as a hydroxide, an acid hydroxide and an oxide are used, these may be dissolved in an acid such as hydrochloric acid for production. Moreover, with respect to each of Ni and M, among the above-mentioned water-soluble compound, compounds that are hardly soluble in water and metal materials, two or more kinds may be used together.

One or more kinds of anhydrides and/or the one or more kinds of hydrates selected from the group consisting of LiOH (lithium hydroxide), NaOH (sodium hydroxide), KOH (potassium hydroxide), $NH_3$ (ammonia), $Na_2CO_3$ (sodium carbonate), $K_2CO_3$ (potassium carbonate) and $(NH_4)_2CO_3$ (ammonium carbonate) can be used as alkali (A) in the step (1). Typically, these are dissolved in water and used as aqueous solutions. The concentration of alkali (A) in the aqueous solution is typically about from 0.1 to 20 M, preferably about from 0.5 to 10M. Additionally, an anhydride and/or a hydrate of LiOH is preferably used as alkali (A) from the viewpoint of decreasing impurities in the lithium composite metal oxide. Moreover, an anhydride and/or a hydrate of KOH is preferably used as alkali (A) from a view point of production costs. In addition, two or more of these alkalis (A) may be used together.

In step (1), when precipitate are generated by mixing the above aqueous solution that contains Ni and M with alkali (A), for example, alkali (A) is added to an aqueous solution that contains Ni and M. At this time, the aqueous solution that contains Ni and M is preferably stirred in advance. An aqueous solution of alkali (A) is preferably added dropwise to an aqueous solution that contains Ni and M with stirring in order to obtain precipitate with a uniform particle size. In this case, the measurement of the pH of the aqueous solution is initiated while stirring the aqueous solution that contains Ni and M. The measurement pH tends to rise as the aqueous solution of alkali (A) is added dropwise, and the aqueous solution of alkali (A) preferably be added dropwise until the measurement pH becomes not less than 11. Additionally, when the amount of alkali (A) to be added is grasped, precipitate may be generated by adding an aqueous solution that contains Ni and M to an aqueous solution of alkali (A).

Moreover, an aqueous solution that contains Ni and M and/or an aqueous solution of Alkali (A) may be cooled and used for uniformly forming precipitate. The temperature at the time of this cooling is preferably 10°C or less, more preferably from about -15°C or more and about 5°C or less. When the temperature of cooling is set at 0°C or less, an antifreeze solution such as methanol, ethanol or ethylene glycol may be used. In this case, 1 to 50 parts by weight of an antifreeze solution may be added to an aqueous solution that contains Ni and M and/or an aqueous solution of Alkali (A), to 100 parts by weight of water.

Alkali (A) may be added to an aqueous solution that contains Ni and M while introducing an oxygen-containing gas such as air for further improving the effect of the present invention. When an aqueous solution that contains Ni and M is added to an aqueous solution of Alkali (A), a gas may be introduced into the aqueous solution of Alkali (A). In addition, the introduction may be carried out after mixing. The time of the introduction is from about 1 hour to about 5 days and the temperature is about 0 to about 100°C.

When solid-liquid separation such as filtration is performed to the mixed solution that has the precipitate generated by mixing in the step (1), a dispersion liquid obtained by dispersing precipitate, which is obtained by subjecting the mixed solution to solid-liquid separation, again in water, is used in the step (2). The precipitate obtained by solid-liquid separation may be washed. Additionally, the mixed solution that has the generated precipitate may be directly used in the step (2) without being carried out solid-liquid separation.

In the step (2), the liquid mixture contains the precipitate obtained in the step (1), the oxidizing agent and alkali (B) including LiOH. The oxidizing agent is used to oxidize the metal elements in the liquid mixture. The oxidizing agents include one or more kinds selected from the group consisting of NaClO (sodium hypochlorite), $HNO_3$ (nitric acid), $KClO_3$ (potassium chlorate), and $H_2O_2$ (hydrogen peroxide). From the viewpoints of production costs and oxidation reactivity, $H_2O_2$ and/or $KClO_3$ is preferred. $KClO_3$ is greately preferable for making the oxidation reaction control easy. Moreover, alkali (B) including LiOH may only contain the anhydride and/or a hydrate of LiOH, or further contain the anhydride and/or a hydrate of NaOH and the anhydride and/or a hydrate of KOH, and preferably contain the anhydride and/or a hydrate of KOH.

A liquid mixture can be produced by adding these oxidizing agent and alkali (B) to the above-mentioned mixed solution or dispersion liquid. The concentration of the oxidizing agent in the liquid mixture is typically from about 0.1 to about 10 M, preferably from about 0.3 to about 5 M. Alkali (B) in the liquid mixture is typically from about 0.1 to 30 M, preferably from about 1 to 20 M. The content of the precipitate in the liquid mixture is typically from about 1 to about 200 g/(liquid mixture 1L). Moreover, the concentration of Li in the liquid mixture is preferably from 0.1 to 10 M, more preferably from 0.5 to 5 M. The liquid mixture may optionally contain lithium chloride, lithium nitrate or lithium carbonate. In addition, the pH of the liquid mixture is preferably 11 or more, more preferably 13 or more for promotion of the reaction in the hydrothermal treatment.

In the step (2), the above-mentioned liquid mixture is subjected to hydrothermal treatment in the temperature range of 150°C to 350°C to obtain a hydrothermal treatment product. The pressure in this temperature range is typically about 0.4 MPa to about 17 MPa. An autoclave may be simply used as a hydrothermal treatment device. The preferred temperature range for the hydrothermal treatment is from 180°C to 250°C. The time of the hydrothermal treatment is typically from about 0.1 to about 150 hours, and preferably from 0.5 to 50 hours.

In step (3), the hydrothermal treatment product is washed. This washing makes it possible to remove impurities in the hydrothermal treatment product, such as the lithium hydroxide, lithium chloride, lithium nitrate, lithium carbonates and oxidizing agent. Washing is typically carried out on solid matter obtained after solid-liquid separation by filtration or the like of the hydrothermal treatment product, by use of water, water-alcohol or acetone, and again the resulting solid matter is subjected to solid-liquid separation. The solid matter after the solid-liquid separation is a washed product.

In the step (4), the washed product is dried to obtain a dried product. Although this drying is typically carried out by heat treatment, and may also be carried out air-blast drying, vacuum drying, or the like. When carried out by heat treatment, the drying is typically carried out at from 50 to 300°C, preferably from about 100°C to about 200°C. The dried product obtained in step (4) is a lithium composite metal compound in the present invention. Additionally, in the above hydrothermal reaction process, the step (5) or (6) may be further added.

(5) A step of calcining the above-mentioned dried product to obtain a calcined product.

(6) A step of calcining the mixture obtained by mixing the above-mentioned dried product with a lithium compound to obtain a calcined product.

Additionally, a lithium composite metal oxide may be manufactured by a manufacturing method including the steps (1), (2), (3) and (7) below. Here, the steps (1), (2) and (3) mean the same steps as the above.

(1) A step of generating precipitate by mixing an aqueous solution containing Ni and M with alkali (A).

(2) A step of subjecting a liquid mixture containing the precipitate, an oxidizing agent and an alkali (B) including LiOH to hydrothermal treatment in the temperature range of 150°C to 350°C to obtain a hydrothermal- treated product.

(3) A step of washing the hydrothermal treatment product to obtain a washed product.

(7) A step of calcining a mixture obtained by mixing the washed product with a lithium salt to obtain a calcined product.

When the manufacture method has the step of obtaining a calcined product, the calcined product is a lithium composite metal compound in the present invention. By carrying out of calcination, the crystallinity of a lithium composite metal compound may be improved, so that the initial discharge capacity becomes large.

In the steps (5), (6) and (7), the temperature of calcination is preferably not less than 300°C and not more than 1000°C, more preferably not less than 500°C and not more than 900°C. The time retained at the above calcination temperature is typically from 0.1 to 20 hours, preferably from 0.5 to 8 hours.

The rate of temperature rise to the above calcination temperature is typically from 50°C to 400°C /hour. The cooling speed from the above calcination temperature to room temperature is typically from 10°C to 400°C /hour. Additionally, air, oxygen, nitrogen, argon or a mixed gas thereof can be used as an atmosphere for calcination. An atmosphere including oxygen is preferred.

Lithium salts in the steps (6) and (7) can include one or more kinds of anhydrides and/or the one or more kinds of hydrates selected from the group consisting of lithium hydroxide, lithium chloride, lithium nitrate and lithium carbonate. For the method of mixing a dried product or a washed product and a lithium salt, either the dry blending method or the wet blending method can be used. For more uniform mixing, the wet blending method is preferred. In this case, the wet blending method also includes the case where a dried product or a washed product is mixed with an aqueous solution containing a lithium salt. The mixing devices can include a stirring mixer, a V-type mixer, a W-type mixer, a ribbon mixer, a drum mixer, a ball mill, and the like. Moreover, the mixture in the step (6) or (7) may be dried prior to calcination.

The above-described lithium composite metal oxide obtained by the solid-state reaction method or the hydrothermal reaction process may be ground using a ball mill, a jet mill or the like, or may be subjected to two or more repetitions of grinding and calcination. The resulting lithium composite metal oxide can also be washed or classified as required.

Next, a positive electrode for a nonaqueous electrolyte secondary battery that has the lithium composite metal oxide of the present invention will be explained.

The positive electrode for the nonaqueous electrolyte secondary battery is manufactured by supporting a positive electrode mixture containing a positive active material (lithium composite metal oxide), a conductive material and a binder to a positive electrode current collector. A carbonaceous material can be used as the above conductive material. The carbonaceous materials can include a graphite powder, carbon black, acetylene black, and the like. Carbon black or acetylene black is small particles and its surface area is large, which makes it capable of improving electroconductivity in a positive electrode, and thereby improves the charge and discharge efficiency and rate characteristics by addition of its small amount to a positive electrode mixture. However, its too much introduction lowers binding properties of the positive electrode mixture and the positive electrode current collector due to the binder and rather causes an increase in the internal resistance. The percentage of the conductive material in the positive electrode mixture is typically from 5 to 20% by weight.

Thermoplastic resin can be used as the above binder. The examples include fluoric resins such as polyvinylidene fluoride (hereinafter, may be called PVDF), polytetrafluoroethylene (hereinafter, may be called PTFE), tetrafluoroethylene propylene hexafluoride vinylidene fluoride copolymer, propylene hexafluoride vinylidene fluoride copolymer, tetrafluoroethylene perfluoro vinyl ether copolymer, and polyolefin resins such as polyethylene and polypropylene. In addition, these two or more kinds may be mixed and used. Additionally, fluoric resin and polyolefin resin can be used as a binder. Fluoric resin and polyolefin resin are contained such that the ratio of the fluoric resin is from 1 to 10% by weight and the ratio of the polyolefin resin is from 0.1 to 2% by weight, to the amount of the positive electrode mixture, whereby a positive electrode mixture excellent in binding properties to a positive electrode current collector can be obtained.

While Al, Ni, stainless steel, or the like can be used as the above positive electrode current collector, Al is preferred from the viewpoints of being easily processed to a thin film and being inexpensive. The methods of supporting a positive electrode mixture to a positive electrode current collector include a method of a compression molding or a method of making a paste of a positive electrode mixture by using an organic solvent or the like, applying it onto a positive electrode current collector, drying it and then fixing it by pressing or the like. For making a paste, a slurry comprising a positive active material, a conductive material, a binder and an organic solvent, is produced. Organic solvents include amine solvents such as N,N-dimethylaminopropylamine and diethylenetriamine, ether solvents such as tetrahydrofuran, ketone solvents such as methyl ethyl ketone, ester solvents such as methyl acetate, amide solvents such as 1-methyl-2-pyrrolidone, and the like.

The methods of applying a positive electrode mixture to a positive electrode current collector include, for example, the slit die coating method, the screen coating method, the curtain coating method, the knife coating method, the gravure coating method, the electrostatic spraying method, and the like. A positive electrode for a nonaqueous electrolyte secondary battery can be manufactured by the methods listed above.

A nonaqueous electrolyte secondary battery can be manufactured by the use of a positive electrode for the nonaqueous electrolyte secondary battery, as follows. In other words, an electrode group obtained by laminating and winding a separator, a negative electrode obtained by supporting a negative electrode mixture to a negative electrode current collector, and the above-mentioned positive electrode is housed in a battery, and then an electrolyte solution containing an organic solvent that contains an electrolyte is impregnated to thereby produce the nonaqueous electrolyte secondary battery.

For the shapes of the electrode group, for example, the cross sections when the electrode group is cut perpen-dicular to its winding axis, can include shapes such as a circle, an oval, a rectangle and a chamfered rectangle. Moreover, the battery shapes can include, for example, paper types, coin types, cylindrical types, rectangular types, and the like.

For the above negative electrode, a substance in which a negative electrode mixture containing a material that can dope/de-dope a lithium ion, is supported to a negative electrode current collector, a lithium metal or a lithium alloy or the like, can be used. The materials that can dope/de-dope a lithium ion include, specifically, carbonaceous materials such as natural graphite, artificial graphite, cokes, carbon black, pyrocarbons, carbon fibers and organic high polymer compound-calcined substances. Chalcogenides such as oxides and sulfides that can dope and de-dope a lithium ion at an electrical potential lower than the positive electrode, can be used. A carbonaceous material that contains graphite such as natural graphite or artificial graphite as main component may be simply used from the viewpoints of the high electrical potential planarity and low average electrical-discharge electric potential and the like. Shapes of carbonaceous materials may include, for example, a flake like natural graphite, a sphere like a mesocarbon microbead, a fiber like a graphitized carbon fiber or an aggregate of a fine powder and the like. In the case where the above-mentioned electrolyte solution does not contain ethylene carbonate mentioned below, the use of a negative electrode mixture that contains polyethylene carbonate may improve the cycling characteristics and high current discharge characteristics of the resulting battery.

The above-mentioned negative electrode mixture may contain a binder as required. The binders can include thermoplastic resins such as PVDF, thermoplastic polyimide, carboxymethylcellulose, polyethylene, polypropylene.

In addition, chalcogenides such as the above-mentioned oxides and sulfides used as a substance that can dope/de-dope a lithium ion contained in a negative electrode mixture include chalcogenides such as crystalline or amorphous oxides and sulfides that mainly include elements of Groups 13, 14 and 15 of the periodic table. The examples of the chalcogenides include amorphous compounds that primarily include a tin oxide, and the like, which can optionally contain a carbonaceous material as a conductive material.

The above-mentioned negative electrode current collectors can include Cu, Ni, stainless steel, and the like. Cu may be used from the viewpoints of being hardly alloyed with lithium and being readily processed to a thin film. The method of supporting a negative electrode mixture to a negative electrode current collector is similar to that in the case of the positive electrode. The examples of the method include a method by compression molding, a method of making a paste of the negative electrode current collector by using a solvent or the like and applying it onto the negative electrode current collector, drying it and then pressure-pressing it, and the like.

The above separators that can be used include, for example, materials that have forms of a porous membrane, a nonwoven fabric, a woven fabric, and the like made from materials such as polyolefin resins (e.g. polyethylenes and polypropylenes), fluoric resins and the nitrogen-containing aromatic polymer. In addition, the separator may be obtained by using two or more kinds of these materials. The separators can include, for example, the separators described in Japanese Patent Laid-Open No. 2000-30686 and Japanese Patent Laid-Open No. 10-324758, and the like. From the viewpoints of an increase in the volumetric energy density and a decrease in the internal resistance, it is preferable to set the separator thinner as long as the mechanical strength is kept. The thickness is typically from about 10 to about 200 $\mu$m, preferably from about 10 to about 30 $\mu$m.

In the above electrolyte solution, the electrolytes include lithium salts such as $LiClO_4$, $LiPF_6$, $LiAsF_6$, $LiSbF_6$, $LIBF_4$, $LiCF_3SO_3$, $LiN(SO_2CF_3)_2$, $LiC(SO_2CF_3)_3$, $Li_2B_{10}Cl_{10}$, low aliphatic carboxylic acid lithium salts and $LiAlCl_4$. Mixtures of these two or more kinds may also be used. Among these, a salt containing at least one species selected from the group consisting of $LiPF_6$, $LiAsF_6$, $LiSbF_6$, $LiBF_4$, $LiCF_3SO_3$, $LiN(SO_2CF_3)2$ and $LiC(SO_2CF_3)_3$, which include fluorine, is typically used as a lithium salt.

Additionally, in the above electrolyte solution, the organic solvents that can be used include, for example, carbonates such as propylene carbonate, ethylene carbonate, dimethyl carbonate, diethyl carbonate, ethylmethyl carbonate, 4-trifluoromethyl-1,3-dioxolane-2-one and 1,2-di(methoxycarbonyloxy)ethane; ethers such as 1,2-dimethoxyethane, 1,3-dimethoxypropane, pentafluoropropylmethyl ether, 2,2,3,3-tetrafluoropropyldifluoromethyl ether, tetrahydrofuran and 2-methyltetrahydrofuran; esters such as methyl formate, methyl acetate and $\gamma$-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, 1,3-propanesultone; or solvents obtained by further introduction of fluorinated substituents into the above organic solvents. Usually, two or more kinds of these are mixed and used. Among these, mixed solvents, containing a carbonate is preferred, and mixed solvents of a cyclic carbonate and a noncyclic carbonate or a cyclic carbonate and an ether are more preferred. Mixed solvents containing ethylene carbonate, dimethyl carbonate and ethylmethyl carbonate are preferable as a mixed solvent of a cyclic carbonate and a noncyclic carbonate, from the viewpoints of having a wide temperature range for operation, having excellent load characteristics, and being hardly degradable even when a graphite material such as natural graphite and artificial graphite is used as an active material of a negative electrode. In addition, from a view point of obtaining especially great improvement effect upon safety, use of an electrolyte solution containing a fluorine-containing lithium salt such as $LiPF_6$ and an organic solvent having a fluorinated substituent, is preferred. A mixed solvent that contains an ether having a fluorinated substituent such as pentafluoropropylmethyl ether and 2,2,3,3-tetrafluoropropyldifluoromethyl ether, and dimethyl carbonate is excellent in high current discharge characteristics and thus is more preferable.

A solid electrolyte may be used instead of the above electrolyte solution. Polymer electrolytes of, for example, polyethylene oxide-based polymer compounds and high polymer compounds containing at least one or more kinds of polyorganosiloxane chains or polyoxyalkylene chains, can be used as polymer electrolytes. Additionally, a so-called gel type electrolyte that keeps a non-aqueous electrolyte solution in a high polymer can also be used. Moreover, use of sulfide electrolytes such as $Li_2S$-$SiS_2$, $Li_2S$-$GeS_2$, $Li_2S$-$P_2S_5$ and $Li_2S$-$B_2S_3$ or inorganic compound electrolytes containing sulfides such as $Li_2S$-$SiS_2$-$Li_3PO_4$ and $Li_2S$-$SiS_2$-$Li_2SO_4$ can improve the safety in some cases.

Next, the present invention will be illustrated in more detail by way of example. In addition, the evaluation and the charge and discharge test of a lithium composite metal oxide (positive active material) were carried out in the following.

1. Charge and Discharge Test

A 1-methyl-2-pyrrolidone (hereafter, may be called NMP) solution of PVDF was added to a mixture of a positive active material (lithium composite metal oxide) and acetylene black of a conductive material so as to be a composition of active material:conductive material:binder = 86:10:4 (weight ratio) and the resulting material was kneaded to thereby make a paste. The paste was applied to a #200 stainless mesh that becomes a current collector and vacuum-dried at 150°C for 8 hours to obtain a positive electrode.

With the resulting positive electrode were combined a solution obtained by dissolving $LiPF_6$ in a mixed solution of 50:50 (volume ratio) of ethylene carbonate (hereafter, may be called EC) and ethylmethyl carbonate (hereafter, may be called EMC),so as to become 1 mol/l (hereafter, may be expressed by $LiPF_6$/EC + EMC) as an electrolyte solution, a polypropylene porous membrane as a separator and metal lithiums as a negative electrode to fabricate a plate battery.

The charge and discharge test by a constant current and current voltage charge, and constant current discharge was carried out in the condition kept at 60°C in the following charge and discharge conditions by use of the above plate battery. The cycle of the charge and discharge test was repeated, the discharge capacity was measured at a specified number of cycles, and the capacity maintaining rate was calculated as follows.

<Charge and Discharge Conditions>

Maximum voltage of charging: 4.3 V, Charge time: 8 hours,
Charge current: 0.4 mA/cm$^2$
Minimum voltage of discharging: 3.0 V, Discharge current: 0.4 mA/cm$^2$

<Capacity maintaining rate>

```
Capacity maintaining rate (%) = Discharge capacity at

specified number of cycles/Initial discharge capacity x 100
```

2. Measurement of BET Specific Surface Area of Lithium Composite Metal Oxide

A lithium composite metal oxide powder was measured using a Flowsorb II2300 available from Micrometrics by the BET one point method.

3. Composition Analysis of Lithium Composite Metal Oxide

A powder was dissolved in hydrochloric acid and then the resulting solution was measured by the inductive coupling plasma emission analysis method (SPS3000, hereinafter, may be called ICP-AES).

4. Solid-State Nuclear Magnetic Resonance Measurement of $^7$Li

The solid-state nuclear magnetic resonance measurement of $^7$Li was carried out at room temperature using Avance 300 available from Bruker Corp. A sample (lithium composite metal oxide, lithium chloride and lithium hydroxide monohydrate) was packed into a test sample tube with an outer diameter of 4 mm, inserted into the device and measured with rotation at a rotational speed of 10 kHz or 11 kHz by the magic angle-spinning method. The central peak of the lithium chloride was set at 0 ppm, and the measurement was carried out within the range of -1000 ppm to 3000 ppm (1 ppm is 116.6 Hz). The pulse width for measurement was set at 1.2 microseconds. This corresponds to a pulse of about 45 degrees. Accumulated were 10240 scans or 4096 scans. The cycle time of the accumulation was set at 0.5 sec. The data point was recorded every 0.85 microseconds, and 4096 points were recorded (32768 points were recorded for the lithium hydroxide monohydrate). The time before the initiation of incorporation of data (dead time) was set at 4.5 microseconds. The data of 28 points in which 4 points were added to the initial 24 points were linearly expected from remaining measured data. The data of 4096 points (the data of 32768 points in the case of the lithium hydroxide monohydrate) including the linearly expected 28 points were used for Fourier transform. An exponentially-weighed function was used and its broadening parameter was set at 50 Hz to improve the signal/noise ratio.

Example 1

1. Production of Lithium Composite Metal Oxide

In a titanium beaker, 50 g of lithium hydroxide monohydrate, 500 ml of distilled water and 200 ml of ethanol were stirred, the lithium hydroxide monohydrate was completely dissolved, and an aqueous lithium hydroxide solution was prepared. The titanium beaker with the aqueous lithium hydroxide solution was put gently in a low temperature thermostat and kept at -10°C. In a glass beaker, 20.20 g of nickel(II) chloride hexahydrate, 20.78 g of manganese(II) chloride tetrahydrate, 14.55 g of cobalt(II) nitrate hexahydrate (the molar ratio of Ni:Mn:Co is 0.35:0.44:0.21) and 500 ml of distilled water were stirred, the above metal salts of the nickel(II) chloride hexahydrate, the manganese(II) chloride tetrahydrate and the cobalt(II) nitrate hexahydrate were completely dissolved, and an aqueous nickel-manganese-cobalt solution was obtained. The aqueous solution was added dropwise to the lithium hydroxide aqueous solution kept at -10°C to generate precipitate.

Next, the mixed solution containing the generated precipitate was taken out of the low temperature thermostat, and an operation (bubbling) wherein air was blown thereinto at room temperature was carried out for 1 day. The resulting mixed solution after bubbling was filtered, distilled and washed to obtain precipitate.

IIn a polytetrafluoroethylene beaker, 50 g of lithium hydroxide monohydrate, 50 g of potassium chlorate, 309 g of potassium hydroxide and 500 ml of distilled water were stirred, the precipitate obtained above was added thereto, and the resulting solution was further stirred to disperse the precipitate to obtain a liquid mixture.

The polytetrafluoroethylene beaker with the above liquid mixture was put gently in an autoclave, subjected to hydrothermal treatment processed at 220°C for 5 hours and cooled naturally to obtain a hydrothermal treatment product. The hydrothermal treatment product was taken out of the autoclave, being subjected to decantation with distilled water to obtain a washed product.

This washed product was mixed with an aqueous lithium hydroxide solution prepared by dissolving 10.49 g of lithium hydroxide monohydrate in 100 ml of distilled water and the resulting solution was dried at 100°C to obtain a mixture. Next, the mixture was ground using an agate mortar. The resulting powder was placed in a calcined alumina container and calcined for 6 hours at 800°C in the atmosphere using an electric furnace. The calcined product was cooled to room temperature, ground, and washed with distilled water by decantation. This resulting product was filtered and dried for 8 hours at 100°C to obtain Powder $A_1$.

The composition of powder $A_1$ was analyzed, with the molar ratio of Li:Ni:Mn:Co being 1.28:0.36:0.44:0.20. In addition, the BET specific surface area of $A_1$ was 7.4 $m^2$/g.

In the solid-state nuclear magnetic resonance spectrum of $^7$Li of powder $A_1$, Signal A with the central peak of a chemical shift of -2 ppm and Signal B with the central peak of a chemical shift of +1556 ppm were detected. The largest peak of Signal A was at a chemical shift of -2 ppm, and the largest peak of Signal B was detected at a chemical shift of +2422 ppm. Additionally, when the largest peak intensity of the lithium hydroxide monohydrate was set to be 100, the largest peak intensity of Signal A was 0.40 and the largest peak intensity of Signal B was 0.12.

2. Charge and Discharge Test of Lithium Secondary Battery

A plate battery was made using powder $A_1$, and the cycle of a charge and discharge test was repeated. As a result, discharge capacities (mAh/g) at first cycle, 10th cycle, 20th cycle, 30th cycle and 50th cycle, were respectively 118, 135, 151, 164 and 175 and the capacity maintaining rates (%) were 100, 114, 128, 139 and 148 respectively.

Example 2

1. Production of Lithium Composite Metal Oxide

Power $A_2$ was obtained as in Example 1 with the exception that 23.17 g of nickel(II) chloride hexahydrate, 23.25 g of manganese(II) chloride tetrahydrate and 7.28 g of cobalt(II) nitrate hexahydrate were used and that the molar ratio of Ni:Mn:Co was 0.41:0.49:0.10.

The composition of powder $A_2$ was analyzed, with the molar ratio of Li:Ni:Mn:Co being 1.34:0.41:0.49:0.10. In addition, the BET specific surface area of $A_2$ was 6.4 $m^2$/g.

In the solid-state nuclear magnetic resonance spectrum of $^7$Li of powder $A_2$, Signal A with the central peak of a chemical shift of -0.8 ppm and Signal B with the central peak of a chemical shift of +1545 ppm were detected. The largest peak of Signal A was at a chemical shift of -0.8 ppm, and the largest peak of Signal B was detected at a chemical shift of +2413 ppm. Additionally, when the largest peak intensity of the lithium hydroxide monohydrate was set to be 100, the largest peak intensity of Signal A was 2.42 and the largest peak intensity of Signal B was 0.41.

2. Charge and Discharge Test of Lithium Secondary Battery

A plate battery was made using powder $A_2$, and the cycle of a charge and discharge test was repeated. As a result, discharge capacities (mAh/g) at first cycle, 10th cycle, 20th cycle, 30th cycle and 50th cycle, were respectively 113, 132, 154, 169 and 177 and the capacity maintaining rates (%) were 100, 117, 136, 149 and 156 respectively.

Example 3

1. Production of Lithium Composite Metal Oxide

Powder $A_3$ was obtained as in Example 1 with the exception that no cobalt(II) nitrate hexahydrate was used that 26.15 g of nickel(II) chloride hexahydrate and 25.73 g of manganese(II) chloride tetrahydrate were used and that the molar ratio of Ni:Mn was 0.46:0.54.
The composition of powder $A_3$ was analyzed, with the molar ratio of Li:Ni:Mn being 1.32:0.46:0.54. In addition, the BET specific surface area of $A_3$ was 5.7 $m^2$/g.
In the solid-state nuclear magnetic resonance spectrum of $^7$Li of powder $A_3$, Signal A with the central peak of a chemical shift of -2 ppm and Signal B with the central peak of a chemical shift of +1798 ppm were detected. The largest peak of Signal A was at a chemical shift of -2 ppm, and the largest peak of Signal B was detected at a chemical shift of +2401 ppm. Additionally, when the largest peak intensity of the lithium hydroxide monohydrate was set to be 100, the largest peak intensity of Signal A was 6.5 and the largest peak intensity of Signal B was 0.77.

2. Charge and Discharge Test of Lithium Secondary Battery

A plate battery was made using powder $A_3$, and the cycle of a charge and discharge test was repeated. As a result, discharge capacities (mAh/g) at first cycle, 10th cycle, 20th cycle, 30th cycle and 50th cycle, were respectively 112, 127, 143, 154 and 163 and the capacity maintaining rates (%) were 100, 113, 127, 137 and 145 respectively.

Example 4

1. Production of Lithium Composite Metal Oxide

A hydrothermal treatment product was obtained as in Example 1 with the exception that the hydrothermal treatment was carried out at a temperature of 220°C for 48 hours. This hydrothermal treatment product was taken out of the autoclave, washed with distilled water by decantation. The resulting washed product was transferred to a petri dish and dried to obtain a dried product.
This dried product was mixed with an aqueous lithium hydroxide solution prepared by dissolving 10.49 g of lithium hydroxide monohydrate in 100 ml of distilled water and the resulting solution was dried at 100°C to obtain a mixture. Next, the mixture was ground using an agate mortar. The resulting powder was placed in a calcined alumina container and calcined for 6 hours at 800°C in the atmosphere using an electric furnace. The calcined product was cooled to room temperature, ground, and washed with distilled water by decantation. This was filtered and dried for 8 hours at 100°C to obtain powder $A_4$.
The composition of powder $A_4$ was analyzed, with the molar ratio of Li:Ni:Mn:Co being 1.38:0.36:0.44:0.21. In addition, the BET specific surface area of $A_4$ was 6.0 $m^2$/g.
In the solid-state nuclear magnetic resonance spectrum of $^7$Li of powder $A_4$, Signal B with the central peak of a chemical shift of +1559 ppm was detected. The largest peak of Signal B was detected at a chemical shift of +2437 ppm. Additionally, when the largest peak intensity of the lithium hydroxide monohydrate was set to be 100, the largest peak intensity of Signal B was 0.33.

2. Charge and Discharge Test of Lithium Secondary Battery

A plate battery was made using powder $A_4$, and the cycle of a charge and discharge test was repeated. As a result, discharge capacities (mAh/g) at first cycle, 10th cycle and 20th cycle were respectively 106, 133 and 159 and the capacity maintaining rates (%) were 100, 126 and 150 respectively.

Comparative Example 1

1. Production of Lithium Composite Metal Oxide

The total amount of 1 kg of powders was weighed such that the molar ratio of Li : Ni : Mn : Co : B = 1.15:0.36: 0.42:0.21:0.03, with respect to the respective powders of nickel hydroxide (available from KANSAI CATALYST CO., LTD.), manganese oxide (available from KOJUNDO CHEMICAL LABORATORY CO., LTD.), lithium carbonate (available from HONJO CHEMICAL CORP.), cobalt oxide (available from Shodo Chemical) and boric acid (Yoneyama Chemical) was obtained. Therafter, these powders were ground and mixed for 4 hours (volume 5L, circumferential speed 0.7m/s) by a dry ball mill with a 15 mm$\varphi$ alumina ball of 5.75 kg as media to obtain a fine particle. This fine particle was put in a box-type electric furnace, and calcined at 1040°C for 4 hours in the air to obtain a calcined product. The calcined product was roughly ground with a plastic hammer. Thereafter, 1 kg of the roughly ground product was ground and mixed for 5 hours (volume 5L, circumferential speed 0.7 m/s) by a dry ball mill with a 15 mm$\varphi$ alumina ball of 5.75 kg as media to obtain a ground powder. Coarse powder were removed with a sieve of a mesh of 45 $\mu$m in the ground powder. A resulting powder was washed with distilled water by decantation, was filtered, and dried for 8 hours at 100°C to obtain Powder $B_1$.
The composition of powder $B_1$ was analyzed, with the molar ratio of Li:Ni:Mn:Co being 1.06:0.37:0.42:0.21. In addition, the BET specific surface area of $B_1$ was 2.6 m$^2$/g. In the solid-state nuclear magnetic resonance spectrum of $^7$Li of Powder $B_1$, neither Signal A nor Signal B in the present invention was detected.

2. Charge and Discharge Test of Lithium Secondary Battery

A plate battery was made using powder $B_1$, and the cycle of a charge and discharge test was repeated. As a result, discharge capacities (mAh/g) at first cycle, 10$^{th}$ cycle and 20$^{th}$ cycle, were respectively 164, 157 and 153 and the capacity maintaining rates (%) were 100, 95 and 93 respectively.

Example 5

1. Production of Lithium Composite Metal Oxide

The total amount of 194 g of powders was weighed such that the molar ratio of Li: Ni: Mn: Co: B = 3.25:0.35: 0.44:0.21:0.03, with respect to the respective powders of nickel hydroxide (available from KANSAI CATALYST CO., LTD.), manganese oxide (available from KOJUNDO CHEMICAL LABORATORY CO., LTD.), lithium carbonate (available from HONJO CHEMICAL CORP.), cobalt oxide (available from Shodo Chemical) and boric acid (Yoneyama Chemical) is obtained. Thereafter, these powders were ground and mixed for 4 hours (volume 1L, circumferential speed 0.6 m/s) by a dry ball mill with a 15 mm$\varphi$ alumina ball of 1.15 kg as media to obtain a fine particle. This fine particle was put in a box-type electric furnace, and calcined at 900°C for 8 hours in the air to obtain a calcined product. The calcined product was ground with a agate mortar. Thereafter, the resulting powder was washed with distilled water by decantation. This was filtered and dried for 8 hours at 100°C to obtain powder $A_5$.
The composition of powder $A_5$ was analyzed, with the molar ratio of Li:Ni:Mn:Co being 1.36:0.37:0.43:0.20. In addition, the BET specific surface area of $A_5$ was 4.4 m$^2$/g.
In the solid-state nuclear magnetic resonance spectrum of $^7$Li of powder $A_5$, Signal A with the central peak of a chemical shift of -2 ppm and Signal B with the central peak of a chemical shift of +1645 ppm were detected. The largest peak of Signal A was at a chemical shift of 256 ppm, and the largest peak of Signal B was detected at a chemical shift of +2334 ppm. Additionally, when the largest peak intensity of the lithium hydroxide monohydrate was set to be 100, the largest peak intensity of Signal A was 0.43 and the largest peak intensity of Signal B was 0.41.

2. Charge and Discharge Test of Lithium Secondary Battery

A plate battery was made using powder $A_5$, and the cycle of a charge and discharge test was repeated. As a result, discharge capacities (mAh/g) at first cycle, 10$^{th}$ cycle and 20$^{th}$ cycle, were respectively 107, 118 and 123 and the capacity maintaining rates (%) were 100, 111 and 116 respectively.

**Claims**

**1.** A lithium composite metal oxide containing Li, Ni and M (wherein, M is Mn and/or Co), **characterized by** exhibiting Signal B below in a spectrum at a rotational speed of 10 kHz among the solid-state nuclear magnetic resonance spectra of $^7$Li of a lithium composite metal oxide obtained by the nuclear magnetic resonance measuring method 1,

<Nuclear magnetic resonance measuring method 1>

A lithium composite metal oxide is rotated at each of rotational speeds of 10 kHz and 11 kHz by the magic angle-spinning method using a nuclear magnetic resonance apparatus with a magnetic field strength of 7.05 teslas, a solid-state nuclear magnetic resonance of $^7$Li of the lithium composite metal oxide is measured at each rotational speed, and a chemical shift of a central peak is evaluated from two resulting solid-state nuclear magnetic resonance spectra (wherein the chemical shift value is a value corrected by taking a position of a central peak of lithium chloride as 0 ppm using lithium chloride as an external standard substance),

<Signal B>

A signal having a central peak and its spinning side bands, wherein the central peak has a chemical shift in the range of +1100 to +1900 ppm and the largest peak has a chemical shift in the range of +2100 to +2600 ppm.

2. The lithium composite metal oxide according to claim 1, wherein the intensity of the largest peak of Signal B is more than 0.05 when the intensity of the largest peak of the solid-state nuclear magnetic resonance spectrum of $^7$Li of lithium hydroxide monohydrate obtained by the nuclear magnetic resonance measuring method 2 is taken as 100,

<Nuclear magnetic resonance measuring method 2>

A lithium hydroxide monohydrate is rotated at a rotational speed of 10 kHz by the magic angle-spinning method using a nuclear magnetic resonance apparatus with a magnetic field strength of 7.05 teslas to measure the solid-state nuclear magnetic resonance of $^7$Li of the lithium hydroxide monohydrate and a solid-state nuclear magnetic resonance spectrum of $^7$Li is obtained.

3. The lithium composite metal oxide according to claim 1 or 2, **characterized by** further exhibiting Signal A in the spectrum obtained by rotating the lithium composite metal oxide at the rotational speed of 10k Hz,

<Signal A>

A signal having a central peak and its spinning side bands, wherein the central peak has a chemical shift in the range of -50 to +300 ppm and the largest peak has a chemical shift in the range of -50 to +300 ppm.

4. The lithium composite metal oxide according to any of claims 1 to 3, wherein the amount of M (mole) is more than 0 and not more than 0.9 to the total amount (mole) of Ni and M.

5. The lithium composite metal oxide according to any of claims 1 to 4, wherein the amount of Co (mole) is not less than 0 and not more than 0.4, to the total amount (mole) of Mn and Co.

6. The lithium composite metal oxide according to any of claims 1 to 4, wherein M is Mn.

7. The lithium composite metal oxide according to any of claims 1 to 6, wherein the amount of Li (mole) is not less than 0.6 and not more than 1.5, to the total amount (mole) of (Ni + M).

8. A positive electrode for a nonaqueous electrolyte secondary battery, comprising the lithium composite metal oxide according to any of claims 1 to 7.

9. A nonaqueous electrolyte secondary battery comprising the positive electrode for the nonaqueous electrolyte secondary battery according to claim 8.

Fig.1

(10kHz)

(11kHz)

|     |     |     |     |     |
|-----|-----|-----|-----|-----|
| 3000 | 2000 | 1000 | 0 | -1000 |

Chemical shift(ppm)

Fig.2

(10kHz)

(11kHz)

2000    1800    1600    1400    1200    1000

Chemical Shift(ppm)

Fig.3

(10kHz)

(11kHz)

Chemical Shift(ppm)

## INTERNATIONAL SEARCH REPORT

International application No.

PCT/JP2007/063934

| A. CLASSIFICATION OF SUBJECT MATTER |
| --- |
| *C01G53/00*(2006.01)i, *H01M4/50*(2006.01)i, *H01M4/52*(2006.01)i |

According to International Patent Classification (IPC) or to both national classification and IPC

| B. FIELDS SEARCHED |
| --- |
| Minimum documentation searched (classification system followed by classification symbols)<br>C01G53/00, H01M4/50, H01M4/52 |

| Documentation searched other than minimum documentation to the extent that such documents are included in the fields searched |
| --- |
| Jitsuyo Shinan Koho 1922-1996 Jitsuyo Shinan Toroku Koho 1996-2007<br>Kokai Jitsuyo Shinan Koho 1971-2007 Toroku Jitsuyo Shinan Koho 1994-2007 |

| Electronic data base consulted during the international search (name of data base and, where practicable, search terms used) |
| --- |
| WPI, Science Direct, JSTPlus(JDream2) |

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2002-100356 A (Seimi Chemical Co., Ltd.),<br>05 April, 2002 (05.04.02),<br>(Family: none) | 1-9 |
| A | JP 2006-24374 A (Mitsui Mining Co., Ltd.),<br>26 January, 2006 (26.01.06),<br>(Family: none) | 1-9 |
| A | WO 2001/036334 A1 (Mitsubishi Chemical Corp.),<br>25 May, 2001 (25.05.01),<br>& JP 2001-206722 A & US 2002/0009645 A1<br>& EP 1142834 A1 | 1-9 |
| A | JP 2005-141916 A (Mitsui Mining Co., Ltd.),<br>02 June, 2005 (02.06.05),<br>(Family: none) | 1-9 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>01 October, 2007 (01.10.07) | Date of mailing of the international search report<br>16 October, 2007 (16.10.07) |
| --- | --- |
| Name and mailing address of the ISA/<br>Japanese Patent Office | Authorized officer |
| Facsimile No. | Telephone No. |

Form PCT/ISA/210 (second sheet) (April 2005)

18

<table>
<tr><td colspan="2"><strong>INTERNATIONAL SEARCH REPORT</strong></td><td>International application No.<br>PCT/JP2007/063934</td></tr>
</table>

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2004-363076 A  (Sony Corp.),<br>24 December, 2004 (24.12.04),<br>(Family: none) | 1-9 |
| A | JP 2000-106182 A  (Mitsui Mining Co., Ltd.),<br>11 April, 2000 (11.04.00),<br>& US 6432583 B1          & EP 977292 A2 | 1-9 |
| A | M. MENETRIER et al., Cobalt segregation in the $LiNi_{1-y}Co_yO_2$ solid solution: a preliminary $^7Li$ NMR study, Solid State Communications, 1994, Vol.90, No.7, pp.439-442 | 1-9 |
| A | Won-Sub YOON et al., $^6Li$ MAS NMR and in situ X-ray studies of lithium nickel manganese oxides, Journal of Power Sources, 2003, Vols.119-121, pp.649-653 | 1-9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002100356 A
- JP 2000030686 A

- JP 10324758 A